# EUROPÄISCHE PATENTSCHRIFT

(11) **EP 3 719 458 B1**
(45) Veröffentlichungstag und Bekanntmachung des Hinweises auf die Patenterteilung: **07.06.2023**
(21) Anmeldenummer: 20160611.8
(22) Anmeldetag: 03.03.2020
(51) Int. Cl.: G01J 1/42, G01N 21/59, G01N 21/94

(54) **MESSVORRICHTUNG ZUR VERSCHMUTZUNGSMESSUNG VON FÜR SOLARSTRAHLUNG TRANSPARENTEM MATERIAL**
MEASURING DEVICE FOR MEASURING THE CONTAMINATION OF MATERIAL TRANSPARENT TO SOLAR RADIATION
DISPOSITIF DE MESURE DE LA CONTAMINATION DE MATIÈRE TRANSPARENTE POUR UN RAYONNEMENT SOLAIRE

(30) Priorität: 02.04.2019 DE 102019204693
(43) Veröffentlichungstag der Anmeldung: 07.10.2020
(73) Patentinhaber: Deutsches Zentrum für Luft- und Raumfahrt e.V., 51147 Köln (DE)
(72) Erfinder: Wolfertstetter, Fabian, 04007 Almeria (ES); Wilbert, Stefan, 04131 Almeria (ES)
(74) Vertreter: dompatent von Kreisler Selting Werner - Partnerschaft von Patent- und Rechtsanwälten mbB

(56) Entgegenhaltungen:
- CN-Y- 201 402 245
- DE-A1-102015 005 408
- DE-B3-102017 211 466
- DE-C2- 3 022 114

## Beschreibung

Die vorliegende Erfindung betrifft eine Messvorrichtung zur Verschmutzungsmessung von für Solarstrahlung transparentem Material.

Bei Solarkraftwerken, insbesondere solarthermischen Kraftwerken kann es aufgrund von Verschmutzungen zu Leistungseinbußen kommen. Insbesondere bei solarthermischen Kraftwerken mit Strahlungsbündelungen (CSP-Technologie) werden Verschmutzungen an reflektierenden Oberflächen bestimmt, um daraus beispielsweise Wartungsintervalle abzuleiten. Bei Parabolrinnenkraftwerken wird die Solarstrahlung über Reflektoren auf ein Absorberrohr konzentriert. Das Absorberrohr ist von einem Glashüllrohr umgeben, durch das die Solarstrahlung transmittiert, bevor sie auf das Absorberrohr trifft. Somit ist neben der Verschmutzung der reflektierenden Oberflächen der Parabolrinnen auch die Verschmutzung des Glashüllrohres von besonderem Interesse. Auch andere Solarkraftwerke weisen häufig für Solarstrahlung transparente Materialien auf, durch die Solarstrahlung transmittiert, bevor sie zu einem Strahlungsempfänger gelangen. Beispielsweise sind bei Turmkraftwerken Scheiben vor dem Eintrittsfenster des Strahlungsempfängers bekannt.

Die für Solarstrahlung transparenten Materialien bei Solarkraftwerken sind der Witterung ausgesetzt und verschmutzen mit zunehmender Expositionsdauer.

Um verschmutzungsbedingte Verluste zu bestimmen ist es bekannt, Messungen per Hand über schmalbandige künstliche LED-Lichtquellen zur Messung der Transmission in unterschiedlichen Wellenlängenbereichen an Glashüllrohren von Absorberrohren durchzuführen. Auch ist es bekannt, Proben des für Solarstrahlung transparenten Materials der Witterung auszusetzen und diese dann im Labor hinsichtlich ihrer Verschmutzung zu vermessen.

Die bekannten Messmethoden sind mit einem erheblichen Arbeitsaufwand verbunden, da für die Bedienung des Messgerätes per Hand oder die Vermessung im Labor eine separate technisch ausgebildete Person notwendig ist. Ferner wird bei der Messung per Hand eine künstliche Lichtquelle verwendet, die ein Spektrum besitzt, das vom Solarspektrum abweicht, wodurch eine Messunsicherheit gegeben ist. Bei der Vermessung im Labor, beispielsweise über ein Spektrophotometer, kann eine solare Gewichtung angewendet werden, die das theoretische Messergebnis für ein Standardsolarspektrum berechnet. Ein Standardsolarspektrum ist jedoch unter Umständen nicht repräsentativ für das am Messstandort herrschende Spektrum.

Darüber hinaus sind die Einfallswinkel bei den vorbekannten Messmethoden häufig nicht repräsentativ für den tatsächlichen Anwendungsfall.

DE 30 22 114 C2 offenbart eine Messvorrichtung zur Messung des optischen Transmissionsvermögens eines lichtdurchlässigen Materials mit den Merkmalen des Oberbegriffs von Anspruch 1. DE 10 2015 005 408 A1 ein Verfahren zur Bestimmung des Transmissionsgrades eines Deckkörpers. CN 201 402 245 Y offenbart ein Verfahren zum Bestimmen eines Abschattungsvermögens von Materialien. DE 10 2017 211 466 B3 offenbart ein Verfahren zur Bestimmung des Verschmutzungsgrades einer reflektierenden Fläche.

Es ist daher Aufgabe der vorliegenden Erfindung, eine Messvorrichtung zur Verfügung zu stellen, mit der die Verschmutzungsmessung von für Solarstrahlung transparenten Materialien verbessert ist.

Die Erfindung ist definiert durch die Merkmale des Anspruch 1.

Die erfindungsgemäße Messvorrichtung zur Verschmutzungsmessung von für Solarstrahlung transparentem Material weist ein Gehäuse mit einer Längsachse auf, wobei eine Halterung das Gehäuse mit seiner Längsachse in horizontaler Richtung haltert, wobei das Gehäuse an einer Halterung um die Längsachse verschwenkbar gelagert ist. Das Gehäuse weist eine für Solarstrahlung opake Wandung auf, die einen Raum längsseitig umschließt, wobei die Wandung mindestens eine erste Öffnung und mindestens eine zweite Öffnung aufweist. Die erste Öffnung ist mit einer für Solarstrahlung transparenten Scheibe verschlossen. Mindestens ein Pyranometer ist in dem Raum an der ersten und zweiten Öffnung zur Messung von durch die erste bzw. die zweite Öffnung eindringender Solarstrahlung platzierbar. Alternativ können mindestens zwei Pyranometer vorgesehen sein, wobei an der ersten und zweiten Öffnung zur Messung von durch die erste und zweite Öffnung eindringender Solarstrahlung jeweils eines der Pyranometer angeordnet ist. An der zweiten

Öffnung ist eine Abdeckvorrichtung zum Abdecken der zweiten Öffnung angeordnet.

Die Abdeckvorrichtung kann beispielsweise eine von außen die Öffnung bedeckende Klappe sein. Die erfindungsgemäße Messvorrichtung ermöglicht, dass die für Solarstrahlung transparente Scheibe der Witterung ausgesetzt werden kann. Durch die Abdeckvorrichtung wird verhindert, dass, während die Scheibe der Witterung ausgesetzt wird, Verschmutzungen in den Raum und auf das oder eines der Pyranometer gelangen. Durch die Halterung des Gehäuses und die verschwenkbare Lagerung kann die transparente Scheibe ausgerichtet werden, wie ein für Solarstrahlung transparentes Material eines Solarkraftwerks im normalen Gebrauch ausgerichtet ist. Beispielsweise bei einem Parabolrinnenkraftwerk wird der größte Anteil der Strahlung von den parabolrinnenförmigen Reflektoren reflektiert und durch das Glashüllrohr eines rohrförmigen Absorbers auf der dem Reflektor zugewandten Seite des Absorberrohrs transmittiert. Der Glashüllrohrabschnitt des Absorberrohrs, der von besonderem Interesse ist, ist somit der dem Reflektor zugewandte Abschnitt. Mittels der erfindungsgemäßen Messvorrichtung kann nun somit die für Solarstrahlung transparente Scheibe so ausgerichtet werden, dass sie die Bewegung eines Parabolrinnenkollektors nachempfindet, der der Sonne nachgeführt wird. Die Scheibe wird also so ausgerichtet, dass sie sich auf der der Sonne abgewandten Seite des Gehäuses befindet. Während dieser Bewegung ist die transparente Scheibe der Witterung ausgesetzt werden. Nach einem vorgegebenen Zeitraum wird das Gehäuse verschwenkt, sodass die Scheibe der Sonnenstrahlung ausgesetzt ist. Die Abdeckvorrichtung kann von der zweiten Öffnung genommen werden und es kann eine Vergleichsmessung zwischen der Sonneneinstrahlung, die ungehindert durch die zweite Öffnung auf das Pyranometer trifft, und der direkten Sonnenstrahlung, die durch die für Solarstrahlung transparente Scheibe transmittiert, erfolgen. Auf diese Weise ist eine vorteilhafte Verschmutzungsmessung der für Solarstrahlung transparenten Scheibe auf besonders einfache Art und Weise möglich. Die opake Wandung des Gehäuses sorgt dafür, dass bei der Messung der direkten Sonnenstrahlung über das Pyranometer im Wesentlichen nur Strahlung, die durch die transparente Scheibe oder die zweite Öffnung in den Raum gelangen, gemessen wird.

Unter "für Solarstrahlung transparent" wird im Rahmen der vorliegenden Erfindung verstanden, dass die Scheibe oder das Material einen hemisphärischen solaren (AM 1,5) Transparenzgrad von mindestens 85 % aufweist. Unter "für Solarstrahlung opak" wird im Rahmen der vorliegenden Erfindung verstanden, dass die Wandung einen hemisphärischen solaren (AM 1,5) Transparenzgrad von weniger als 3 % aufweist.

Unter dem Merkmal, dass die Wandung den Raum längsseitig umschließt, wird verstanden, dass sich diese parallel zu der Längsachse und die Längsachse mit Abstand umgebend befindet.

Bei der Ausführungsform, bei der ein Pyranometer vorgesehen ist, kann bei der Messung mittels der einfallenden direkten Solarstrahlung mittels Pyranometer vorgesehen sein, dass das Pyranometer zunächst unter der ersten Öffnung angeordnet wird, um die durch die transparente Scheibe transmittierende Solarstrahlung zu messen, und anschließend unter der zweiten Öffnung. Hierfür kann das Pyrometer auf einer Führungsschiene angeordnet sein, sodass das Pyranometer von einer Position auf die andere verschiebbar ist. Da sich bei den nacheinander durchgeführten Messungen die Strahlungsintensität ändern kann, können jedoch Messfehler entstehen.

Vorzugsweise ist vorgesehen, dass das Gehäuse rohrförmig ausgebildet ist. Das Gehäuse kann einen kreisförmigen Querschnitt besitzen. Auf diese Weise kann das Gehäuse in vorteilhafter Weise um seine Längsachse verschwenkt werden. Ferner ist in vorteilhafter Weise die Form des Gehäuses an die Form eines Absorberrohrs mit Glashüllrohr angepasst. Es kann vorgesehen sein, dass das Gehäuse einen Durchmesser aufweist, der dem Durchmesser eines Glashüllrohrs eines Parabolrinnenkraftwerks entspricht. Beispielsweise kann das Gehäuse einen Durchmesser aufweisen, der zwischen 10 cm und 20 cm liegt.

In einer Ausführungsform der Messvorrichtung kann vorgesehen sein, dass eine Lüftungsvorrichtung zur Belüftung des Raumes vorgesehen ist. Da das Gehäuse tagsüber der Solarstrahlung ausgesetzt ist und eine für Solarstrahlung opake Wandung aufweist, kann es zu einer Aufheizung des Raumes in dem Gehäuse kommen.

Um eine korrekte Funktion des oder der in dem Raum angeordneten Pyranometer zu gewährleisten, kann über die Lüftungsvorrichtung bei Bedarf kühle Außenluft in den Raum eingeleitet werden.

Dabei kann vorgesehen sein, dass das Gehäuse stirnseitig mittels Platten verschlossen ist, wobei in zumindest einer der Platten Lüftungsöffnungen angeordnet sind für Zuluft und Abluft der Lüftungsvorrichtung. Auf diese Weise kann die Lüftungsvorrichtung in vorteilhafter Weise kühle Außenluft in den Raum leiten.

Es kann auch vorgesehen sein, dass die Lüftungsvorrichtung mehrere Lüfter aufweist und dass an beiden Stirnplatten Lüftungsöffnungen angeordnet sind.

Vorzugsweise ist vorgesehen, dass in dem Raum ein Thermostat zur Überwachung der Temperatur des Raumes angeordnet ist. Mittels der von dem Thermostat ermittelten Daten kann festgestellt werden, ob die in dem Raum herrschende Temperatur bei einer Messung der einfallenden direkten Solarstrahlung mittels Pyranometern sich in einem vorgegebenen Bereich befinden.

Es kann auch vorgesehen sein, dass die Lüftungsvorrichtung über von dem Thermostat erhaltene Daten regelbar ist. Mit anderen Worten: Wenn die Temperatur in dem Raum zu hoch ist, kann die Lüftungsvorrichtung automatisch starten und kühle Außenluft in dem Raum leiten.

Vorzugsweise ist vorgesehen, dass eine Antriebsvorrichtung das Gehäuse für die Verschwenkbewegung um die Längsachse antreibt. Dadurch ist ein automatischer Betrieb der Messvorrichtung möglich. Die Antriebsvorrichtung kann in dem Raum angeordnet sein.

Es kann vorgesehen sein, dass an der Abdeckvorrichtung eine Rückhaltevorrichtung angreift, wobei die Abdeckvorrichtung über eine Verschwenkbewegung des Gehäuses um die Längsachse öffenbar oder schließbar ist. Mit anderen Worten: Die Rückhaltevorrichtung hält die Abdeckvorrichtung bei einem Verschwenken des Gehäuses um die Längsachse zurück, wodurch beispielsweise die zweite Öffnung geöffnet wird. Die Rückhaltevorrichtung kann beispielsweise an der Halterung des Gehäuses angebracht sein, beispielsweise in Form eines Stahlseils, das beispielsweise parallel zu dem Gehäuse angeordnet ist. Auch kann vorgesehen sein, dass die Abdeckvorrichtung einen Feststellmechanismus, beispielsweise in Form von einer oder mehrerer Federn, zum Halten der offenen oder geschlossenen Position der Abdeckvorrichtung aufweist.

Alternativ kann vorgesehen sein, dass die Abdeckvorrichtung einen separaten Antrieb zum Öffnen und Schließen aufweist. Auf diese Weise kann das Öffnen und Schließen der Abdeckvorrichtung unabhängig von der Verschwenkbewegung des Gehäuses erfolgen.

Sowohl die Rückhaltevorrichtung als auch der Antrieb der Abdeckvorrichtung ermöglichen in vorteilhafter Weise den automatischen Betrieb der erfindungsgemä-ßen Messvorrichtung.

Bei der erfindungsgemäßen Messvorrichtung kann ferner vorgesehen sein, dass eine gebogene Platte vorgesehen ist, die mit Abstand zu dem Gehäuse angeordnet ist. Über die gebogene Platte lässt sich in vorteilhafter Weise ein parabolförmiger Reflektor simulieren, wodurch die Verschmutzungsneigung der transparenten Scheibe besonders realistisch nachstellbar ist.

Bei der Verwendung der erfindungsgemäßen Messvorrichtung kann auch vorgesehen sein, dass das Gehäuse in der Phase, in der die transparente Scheibe der Witterung ausgesetzt ist, das Gehäuse über den Tag verschwenkt wird. Insbesondere kann vorgesehen sein, dass die transparente Scheibe mit einem Versatz von 180° zur Sonne dem Sonnenstand nachgeführt wird. Diese Art der Nachführung stellt die Positionierung in einem realen Parabolrinnenkollektor nach und erwirkt dadurch eine Verschmutzungscharakteristik wie sie im Kraftwerksbetrieb auftreten würde.

Während der Messung der direkt einfallenden Strahlung über das mindestens eine Pyranometer kann auch vorgesehen sein, dass der Einfallswinkel zu der Sonne registriert wird. Dadurch kann der Transmissionsgrad der transparenten Scheibe in Abhängigkeit des Einfallswinkels ermittelt werden.

Mittels der erfindungsgemäßen Messvorrichtung ist es möglich, die Verschmutzungsbelastung von in Solarkraftwerken eingesetzten transparenten Materialien zu bestimmen und somit die Ertragsvorausschätzung für Kraftwerksprojekte verbessert werden. Auch können bei in Betrieb befindlichen Solarkraftwerken die Putzaktivitäten optimiert werden.

Im Folgenden wird unter Bezugnahme auf die einzige Figur die Erfindung näher erläutert. Es zeigen:
Fig. 1 eine schematische Ansicht der erfindungsgemäßen Messvorrichtung zur Verschmutzungsmessung von für Solarstrahlung transparentem Material und
Fig. 2 eine schematische Schnittdarstellung der erfindungsgemäßen Messvorrichtung.

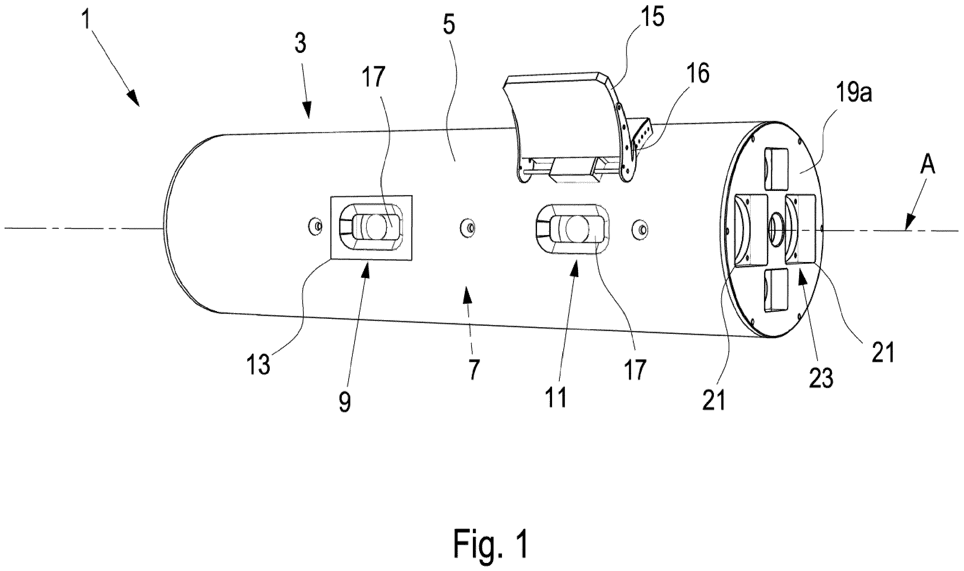

Die erfindungsgemäße Messvorrichtung 1 gemäß Fig. 1 weist ein Gehäuse 3 mit einer Längsachse A auf. Das Gehäuse 3 ist über eine nicht dargestellte Halterung mit seiner Längsachse in horizontaler Richtung gehaltert, wobei das Gehäuse an der Halterung um die Längsachse A gelagert ist.

Das Gehäuse 3 weist eine für Solarstrahlung opake Wandung 5 auf, die einen Raum 7 längsseitig umschließt.

Die Wandung 5 weist eine erste Öffnung 9 und eine zweite Öffnung 11 auf. Die erste Öffnung 9 ist von einer für Solarstrahlung transparenten Scheibe 13 verschlossen.

An der zweiten Öffnung 11 ist eine Abdeckvorrichtung 15 zum Abdecken der zweiten Öffnung 11 angeordnet.

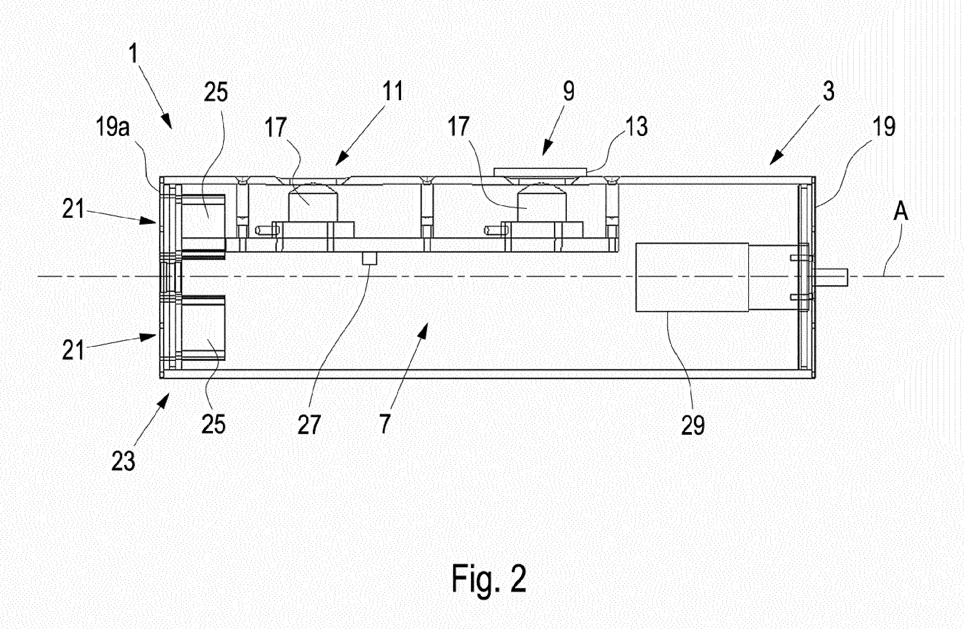

Wie am besten aus Figur 2, einer schematischen Schnittdarstellung der erfindungsgemäßen Messvorrichtung gemäß Figur 1, hervorgeht, sind in dem Raum 7 an der ersten und zweiten Öffnung 9, 11 jeweils ein Pyranometer 17 angeordnet, mittels der die durch die erste und zweite Öffnung eindringende Solarstrahlung messbar ist. Die Pyranometer 17 sind derart angeordnet, dass sie jeweils mit der ersten oder zweiten Öffnung 9, 11 fluchten.

Das Gehäuse 3 ist stirnseitig mit Platten 19, 19a verschlossen. In der Platte 19a sind Lüftungsöffnungen 21 angeordnet, die für Zuluft und Abluft einer Lüftungsvorrichtung 23 dienen. Die Lüftungsvorrichtung 23 besteht aus Lüftern 25, die an den Lüftungsöffnungen 21 angeordnet sind und Frischluft dem Raum 7 zuführen bzw. Luft aus dem Raum 7 nach außen führen.

In dem Raum 7 ist ferner ein Thermostat 27 vorgesehen, der die Temperatur des Raumes 7 registriert und die Lüftungsvorrichtung 23 steuert, sodass die Temperatur in dem Raum 7 in vorteilhafter Weise geregelt werden kann, um die korrekte Funktion der Pyranometer 17 zu gewährleisten.

In dem Raum 7 ist ferner eine Antriebsvorrichtung 29 angeordnet, über die das Gehäuse 3 für die Verschwenkbewegung um die Längsachse A angetrieben wird. Das Gehäuse 3 kann somit automatisch um seine Längsachse verschwenkt werden.

An der nicht dargestellten Halterung der Achse A ist in einem Abstand von etwas mehr als der Radius des Gehäuses 3 eine nicht dargestellte Rückhaltevorrichtung befestigt, mittels der die Abdeckvorrichtung 15 mittels der Verschwenkbewegung des Gehäuses 3 geöffnet und geschlossen werden kann. Die Rückhaltvorrichtung kann beispielsweise ein Stahlseil sein, das nicht dargestellten Halterung des Messgerätes befestigt ist und parallel zu dem Gehäuse angeordnet ist. Um ein Halten der geschlossenen oder geöffneten Position der Abdeckvorrichtung sicherzustellen kann die Abdeckvorrichtung eine Federvorrichtung aufweisen, die in Richtung zu der jeweils angenommenen Position der Abdeckvorrichtung 15 wirkt. Die Position der Abdeckvorrichtung wird durch die fixen Rückhaltevorrichtung während einer Vorbeifahrt des Messgerätes geändert. Zum Öffnen hakt das Stahlseil in der Öse 16 nahe der Aufhängung der geschlossenen Abdeckklappe 15 ein und öffnet diese bei Bewegung in Richtung von der Öffnung 11 weg. Die Abdeckvorrichtung 15 wird geschlossen wenn sich das Gerät 3 bei geöffneter Abdeckvorrichtung 15 in die entgegengesetzte Richtung am Stahlseil vorbei bewegt.

Für eine Verschmutzungsmessung der transparenten Scheibe 13 wird die Messvorrichtung 1 zunächst in eine Exponierposition verschwenkt, in der sich die transparente Scheibe 13 nach unten gerichtet befindet. Vorzugsweise ist die transparente Scheibe 13 um 180° von der Sonne versetzt. Es kann nun vorgesehen sein, dass während des Tages das Gehäuse 3 über die Antriebsvorrichtung 29 mit dem Versatz von 180° zur Sonne nachgeführt wird. In der Exponierphase ist die Abdeckvorrichtung 15 in ihrer Schließstellung, sodass die Öffnung 11 und somit das darunterliegende Pyranometer 17 abgedeckt sind um Verschmutzung desselben zu minimieren.

In einer Messphase wird das Gehäuse 3 derart verschwenkt, dass sich die erste Öffnung 9 in direkter Sonneneinstrahlung befindet. Bei dem Verschwenken des Gehäuses 3 in die Messposition wird die Abdeckvorrichtung 15 durch die Rückhaltevorrichtung geöffnet. Die Sonne strahlt nun direkt in die erste und zweite Öffnung 9, 11 und mittels der darunterliegenden Pyranometer 17 können die Strahlungsleistungen gemessen werden. Die durch die transparente Scheibe 13 transmittierte Solarstrahlung kann mit der direkt auf das Pyranometer 17 unterhalb der zweiten Öffnung 11 auftreffende Solarstrahlung verglichen werden. Daraus ergibt sich der Transmissionsgrad der transparenten Scheibe 13. Zu der Messung wird auch der Einfallswinkel der Sonne registriert, sodass nach mehreren Messungen der Transmissionsgrad in Abhängigkeit des Einfallswinkels angegeben werden kann.

Da sich mit zunehmender Verschmutzung der Transmissionsgrad der transparenten Scheibe 13 ändert und gleichzeitig eine Verschmutzung beider Pyranometer verhindert wird, kann das Verschmutzungsverhalten der Scheibe 13 auch über Zeiträume von mehreren Wochen wartungsfrei aufgezeichnet werden. Aus den erhaltenen Verschmutzungsraten kann auf Ertragsverluste eines Solarkraftwerks oder die Notwendigkeit einer Reinigung eines Solarkraftwerks geschlossen werden.

## Patentansprüche

1. Messvorrichtung (1) zur Verschmutzungsmessung von für Solarstrahlung transparentem Material mit einem Gehäuse (3), wobei das Gehäuse (3) eine für Solarstrahlung opake Wandung (5) aufweist, wobei die Wandung (5) mindestens eine erste Öffnung (9) aufweist und die erste Öffnung (9) mit einer für Solarstrahlung transparenten Scheibe (13) verschlossen ist,
**dadurch gekennzeichnet, dass**
das Gehäuse (3) eine Längsachse (A) aufweist, wobei eine Halterung das Gehäuse (3) mit seiner Längsachse (A) in horizontaler Richtung haltert und das Gehäuse (3) an der Halterung um die Längsachse (A) verschwenkbar gelagert ist, wobei die Wandung (5) einen Raum (7) längsseitig umschließt und parallel zu der Längsachse (A) angeordnet ist, wobei die Wandung (5) mindestens eine zweite Öffnung (11) aufweist, wobei an der zweiten Öffnung (11) eine Abdeckvorrichtung (15) zum Abdecken der zweiten Öffnung (11) angeordnet ist, und mit mindestens einem Pyranometer (17), das in dem Raum (7) an der ersten und der zweiten Öffnung (9, 11) zur Messung von durch die erste bzw. die zweite Öffnung (9, 11) eindringender Solarstrahlung positionierbar ist oder mit mindestens zwei Pyranometern, wobei an der ersten und zweiten Öffnung (9, 11) zur Messung von durch die erste und zweite Öffnung (9, 11) eindringender Solarstrahlung jeweils eines der Pyranometer (17) angeordnet ist.

2. Messvorrichtung nach Anspruch 1, **dadurch gekennzeichnet, dass** das Gehäuse (3) rohrförmig ausgebildet ist.

3. Messvorrichtung nach Anspruch 1 oder 2, **gekennzeichnet durch** eine Lüftungsvorrichtung (23) zur Belüftung des Raumes (7).

4. Messvorrichtung nach Anspruch 3, **dadurch gekennzeichnet, dass** das Gehäuse (3) stirnseitig mittels Platten (19, 19a) verschlossen ist, wobei in zumindest einer der Platten (19a) Lüftungsöffnungen (21) angeordnet sind für Zuluft und Abluft der Lüftungsvorrichtung (23).

5. Messvorrichtung nach einem der Ansprüche 1 bis 4, **dadurch gekennzeichnet, dass** in dem Raum (7) ein Thermostat (27) zur Überwachung der Temperatur des Raumes (7) angeordnet ist.

6. Messvorrichtung nach Anspruch 5, **dadurch gekennzeichnet, dass** die Lüftungsvorrichtung (23) über von dem Thermostat (27) erhaltenen Daten regelbar ist.

7. Messvorrichtung nach einem der Ansprüche 1 bis 6, **gekennzeichnet durch** eine Antriebsvorrichtung (29), über die das Gehäuse (3) für die Verschwenkbewegung um die Längsachse (A) antreibbar ist.

8. Messvorrichtung nach einem der Ansprüche 1 bis 7, **dadurch gekennzeichnet, dass** an der Halterung des Gehäuses (3) eine Rückhaltevorrichtung angebracht ist, die an der Abdeckvorrichtung (15) angreift, wobei die Abdeckvorrichtung (15) über eine Verschwenkbewegung des Gehäuses (3) um die Längsachse (A) öffenbar oder schließbar ist.

9. Messvorrichtung nach einem der Ansprüche 1 bis 8, **dadurch gekennzeichnet, dass** die Abdeckvorrichtung (15) einen Feststellmechanismus zum Halten der offenen oder geschlossenen Position der Abdeckvorrichtung (15) aufweist.

10. Messvorrichtung nach einem der Ansprüche 1 bis 7, **dadurch gekennzeichnet, dass** die Abdeckvorrichtung (15) einen Antrieb zum Öffnen und Schlie-ßen aufweist.

## Claims

1. A measuring device (1) for measuring contamination of material transparent to solar radiation, comprising a housing (3), the housing (3) having a wall (5) opaque to solar radiation, the wall (5) having at least one first opening (9) and said first opening (9) being closed by a pane (13) transparent to solar radiation,
**characterized in that**
the housing (3) has a longitudinal axis (A), wherein a mounting supports the housing (3) with its longitudinal axis (A) in the horizontal direction and the housing (3) is mounted on the mounting so as to be pivotable about the longitudinal axis (A), wherein the wall (5) encloses a space (7) longitudinally and is arranged parallel to the longitudinal axis (A), wherein the wall (5) has at least one second opening (11), wherein a covering device (15) for covering the second opening (11) is arranged at the second opening (11), and with at least one pyranometer (17) positionable in the space (7) at the first and second openings (9, 11) for measuring solar radiation penetrating the first and second openings (9, 11), respectively, or with at least two pyranometers, wherein one of the pyranometers (17) is arranged at each of the first and second opening (9, 11) for measuring solar radiation penetrating the first and second openings (9, 11).

2. The measuring device according to claim 1, **characterized in that** the housing (3) is formed to be tubular.

3. The measuring device according to claim 1 or 2, **characterized by** a ventilation device (23) for ventilation of the room (7).

4. The measuring device according to claim 3, **characterized in that** the housing (3) is closed on the face side by means of plates (19, 19a), wherein ventilation openings (21) are arranged in at least one of the plates (19a) for supply air and exhaust air of the ventilation device (23).

5. The measuring device according to any one of claims 1 to 4, **characterized in that** a thermostat (27) for monitoring the temperature of the room (7) is arranged in the room (7).

6. The measuring device according to claim 5, **characterized in that** the ventilation device (23) is controllable via data received from the thermostat (27).

7. The measuring device according to any one of claims 1 to 6, **characterized by** a driving device (29) by means of which the housing (3) can be driven for the pivoting movement about the longitudinal axis (A).

8. The measuring device according to any one of claims 1 to 7, **characterized in that** a retaining device engaging the covering device (15) is attached to the mounting of the housing (3), wherein the covering device (15) is adapted to be opened and closed via a pivoting movement of the housing (3) about the longitudinal axis (A).

9. The measuring device according to any one of claims 1 to 8, **characterized in that** the covering device (15) has a locking mechanism for holding the open or closed position of the covering device (15).

10. The measuring device according to any one of claims 1 to 7, **characterized in that** the covering device (15) has a drive for opening and closing.

## Revendications

1. Dispositif de mesure (1) destiné à mesurer l'encrassement de matériaux transparents au rayonnement solaire doté d'un boîtier (3), dans lequel le boîtier (3) comporte une paroi (5) opaque au rayonnement solaire, dans lequel la paroi (5) comporte au moins une première ouverture (9) et la première ouverture (9) est fermée par une vitre (13) transparente au rayonnement solaire,
**caractérisé en ce que**
le boîtier (3) comporte un axe longitudinal (A), dans lequel un support maintient le boîtier (3) avec son axe longitudinal (A) dans la direction horizontale et le boîtier (3) est disposé sur le support de manière à pouvoir pivoter autour de l'axe longitudinal (A), dans lequel la paroi (5) entoure longitudinalement un espace (7) et est disposé parallèlement à l'axe longitudinal (A), dans lequel la paroi (5) comporte au moins une deuxième ouverture (11), dans lequel un dispositif de couverture (15) destiné à couvrir la deuxième ouverture (11) est disposé sur la deuxième ouverture (11), et doté d'au moins un pyranomètre (17), lequel peut être positionné dans l'espace (7) sur la première et la deuxième ouverture (9, 11) afin de mesurer le rayonnement solaire pénétrant par la première ou la deuxième ouverture (9, 11) ou doté d'au moins deux pyranomètres, dans lequel un des pyranomètres (17) est respectivement disposé sur la première et la deuxième ouverture (9, 11) afin de mesurer le rayonnement solaire pénétrant par la première ou la deuxième ouverture (9, 11).

2. Dispositif de mesure selon la revendication 1, **caractérisé en ce que** le boîtier (3) est réalisé en forme tubulaire.

3. Dispositif de mesure selon la revendication 1 ou 2, **caractérisé par** un dispositif de ventilation (23) destiné à la ventilation de l'espace (7).

4. Dispositif de mesure selon la revendication 3, **caractérisé en ce que** le boîtier (3) est fermé frontalement au moyen de plaques (19, 19a), dans lequel des ouvertures de ventilation (21) sont disposées dans au moins une des plaques (19a) pour l'air entrant et l'air sortant du dispositif de ventilation (23).

5. Dispositif de mesure selon l'une des revendications 1 à 4, **caractérisé en ce que** dans l'espace (7) est disposé un thermostat (27) destiné à la surveillance de la température de l'espace (7).

6. Dispositif de mesure selon la revendication 5, **caractérisé en ce que** le dispositif de ventilation (23) est régulable par le biais de données provenant du thermostat (27).

7. Dispositif de mesure selon l'une des revendications 1 à 6, **caractérisé par** un dispositif d'entraînement (29), par le biais duquel le boîtier (3) peut être entraîné pour le mouvement de pivotement autour de l'axe longitudinal (A).

8. Dispositif de mesure selon l'une des revendications 1 à 7, **caractérisé en ce qu'**un dispositif de retenue entrant en prise sur le dispositif de couverture (15) est monté sur le support du boîtier (3), dans lequel le dispositif de couverture (15) peut être ouvert ou fermé par le biais d'un mouvement de pivotement du boîtier (3) autour de l'axe longitudinal (A).

9. Dispositif de mesure selon l'une des revendications 1 à 8, **caractérisé en ce que** le dispositif de couverture (15) comporte un mécanisme de verrouillage destiné à maintenir le dispositif de couverture (15) en position ouverte ou fermée.

10. Dispositif de mesure selon l'une des revendications 1 à 7, **caractérisée en ce que** le dispositif de couverture (15) comporte un entraînement pour l'ouverture et la fermeture.
